# EUROPEAN PATENT APPLICATION

(11) **EP 2 772 635 A1**
(43) Date of publication of application: **03.09.2014**
(21) Application number: 11874695.7
(22) Date of filing: 26.10.2011
(51) Int. Cl.: F02D 45/00, F02D 41/04, F02D 41/38, F02D 41/40

(54) **CETANE NUMBER DETERMINATION DEVICE FOR INTERNAL COMBUSTION ENGINE**

(71) Applicant: TOYOTA JIDOSHA KABUSHIKI KAISHA, Toyota-shi, Aichi-ken, 471-8571 (JP)
(72) Inventor: MINAMI, Masahiro, Toyota-shi, Aichi-ken, 471-8571 (JP)
(74) Representative: Albutt, Anthony John
(86) International application number: PCT/JP2011/074674
(87) International publication number: WO 2013/061420

(57) **Abstract**

In a compression stoke of a diesel engine, injection in a small fuel injection amount is carried out from an injector into a cylinder such that fuel injection completes by the time when an in-cylinder temperature reaches 750K. In a period from timing at which the in-cylinder temperature has reached 750K to when the in-cylinder temperature reaches 900K, a thermal energy amount resulting from combustion of a fuel is accumulated as a low-temperature oxidation reaction energy amount. Where the thermal energy amount in the case where the entire fuel in the small fuel injection amount is combusted is a total energy amount, the ratio of the low-temperature oxidation reaction energy amount to the total energy amount is obtained as an energy ratio. The energy ratio is applied to a cetane number determination map, and a cetane number of the fuel is extracted from the cetane number determination map.

## Description

### TECHNICAL FIELD

The invention relates to a cetane number determination device for a compression self-ignition internal combustion engine that is typically a diesel engine. Particularly, the invention relates to measures for improving cetane number determination accuracy.

### BACKGROUND ART

As is conventionally known, a diesel engine that is used as an automobile engine, or the like, is required to achieve improvement in exhaust emissions, ensuring required engine torque, improvement in fuel consumption rate, and the like. One of means for responding to these requests is to optimize a combustion state of fuel inside a cylinder. In order to optimize the combustion state, it is required to appropriately set control values of control parameters, such as fuel injection timing and fuel injection amount, on the basis of fuel properties.

The fuel properties of light oil (hereinafter, may also be referred to as "fuel") that is used as the fuel of a diesel engine include a cetane number. The ignitability of the fuel depends on the cetane number.

Cetane (straight-chain molecular structure, such as n-cetane (C₁₆H₃₄), which is able to carry out low-temperature oxidation reaction; hereinafter, a low-temperature oxidation reaction component may be referred to as "n-cetane, and the like") included in the fuel is an ignitable component even when the in-cylinder pressure is relatively low or the in-cylinder temperature is relatively low, the low-temperature oxidation reaction more easily proceeds inside the cylinder as the amount of the cetane increases, so an ignition delay is suppressed. That is, ignitability is better as a fuel has a higher cetane number, and an ignition delay of pre-mixing combustion reduces. In contrast, the ignitability of a fuel having a low cetane number is poor, and an ignition delay of pre-mixing combustion increases.

Therefore, in order to respond to the above requests, it is required to determine the cetane number of a usage fuel with high accuracy, and to control the control parameters (fuel injection mode, such as fuel injection timing and a fuel injection amount) in response to the determined cetane number.

As a method of determining the cetane number of a fuel, the following Patent Document 1 and Patent Document 2 are suggested.

Patent Document 1 describes that the cetane number is determined on the basis of a combustion rate in the case where fuel is injected in a small injection amount. Specifically, the cetane number is identified on the basis of a combustion rate (= fuel combustion amount / fuel injection amount) in a predetermined sampling period after fuel injection.

Patent Document 2 describes that the cetane number of a fuel is determined on the basis of the exhaust gas temperature and operating state (engine load) of an engine. Specifically, in light of the fact that an ignition delay period of a fuel extends as the cetane number decreases and then the exhaust gas temperature tends to decrease with an increase in unburned fuel accordingly, the cetane number of a fuel is determined to be lower as the exhaust gas temperature decreases.

### RELATED ART DOCUMENT

### PATENT DOCUMENT

Patent Document 1: Japanese Patent Application Publication No. 2009-174322 (JP 2009-174322 A)
Patent Document 2: Japanese Patent Application Publication No. 2010-127257 (JP 2010-127257 A)

### SUMMARY OF THE INVENTION

### PROBLEM TO BE SOLVED BY THE INVENTION

However, with an existing cetane number determination method, the cetane number determination accuracy is not sufficiently obtained, and control values of control parameters, which are set on the basis of the determined cetane number, are also actually not appropriate values.

For example, the above Patent Document 1 describes that cetane number determination is carried out at the time when pilot injection is carried out, and a period from when combustion of fuel injected through pilot injection starts to when combustion of fuel injected through main injection starts is set as the sampling period. With this, the sampling period significantly varies with the injection timing of main injection, and a variation state in temperature in a combustion chamber (in-cylinder temperature) in the sampling period also significantly varies accordingly. Therefore, the combustion rate (= fuel combustion amount / fuel injection amount) is not always a value that reflects the cetane number of a fuel (when the injection timing of main injection is retarded, a component other than the low-temperature oxidation reaction component, that is, the n-cetane, and the like, combusts before the start of main combustion and, as a result, the combustion rate in the sampling period significantly varies (which is not a combustion rate based on the cetane number)), so it is highly likely to lead to erroneous determination of the cetane number.

The exhaust gas temperature of the engine significantly varies on the basis of not only the cetane number of a fuel but also other parameters (such as an EGR rate and an outside air temperature), so it is highly likely to lead to erroneous determination of the cetane number even with the cetane number determination method described in the above Patent Document 2.

Incidentally, the inventors of the invention of this application have already suggested that, as measures for improving the cetane number determination accuracy, a combustion period of a low-temperature oxidation reaction component, such as n-cetane, and a combustion period of a fuel component other than the low-temperature oxidation reaction component are separated from each other, and then the cetane number of the fuel is determined from a torque equivalent in the combustion period of the n-cetane, and the like, at the time when fuel injection in a prescribed amount is carried out (Application No. PCT/JP2011/74661).

However, when the cetane number of the fuel is determined on the basis of the torque equivalent, a conversion rate at which the energy amount of the fuel is converted to an engine torque may fluctuate depending on various parameters, so a determination method that further improves the cetane number determination accuracy is desired.

The invention is contemplated in view of the above point, and it is an object of the invention to provide a cetane number determination device for an internal combustion engine, which is able to further improve the accuracy of determining the cetane number of a fuel.

### MEANS FOR SOLVING THE PROBLEM

### Summary of the Invention

In the summary of the invention contemplated to achieve the above object, when a fuel injected into a cylinder combusts, by utilizing a high correlation between an energy amount, generated through combustion of the fuel in a period in which an in-cylinder gas temperature changes from a low-temperature oxidation reaction start temperature of the fuel to a high-temperature oxidation reaction start temperature of the fuel, and the amount of cetane in the fuel, a cetane number of the fuel is determined on the basis of the ratio of the energy amount, generated in the above period (in a period in which the in-cylinder gas temperature changes from the low-temperature oxidation reaction start temperature to the high-temperature oxidation reaction start temperature) (energy amount generated through combustion of a low-temperature oxidation reaction component), with respect to the total amount of the fuel injected into the cylinder (the total amount of the low-temperature oxidation reaction component and the high-temperature oxidation reaction component).

### Solving Means

Specifically, the invention is predicated on a cetane number determination device that determines a cetane number of a fuel that is used in a compression self-ignition internal combustion engine that carries out combustion through self-ignition of the fuel injected from a fuel injection valve into a cylinder. Where a total energy amount of the fuel injected from the fuel injection valve into the cylinder is an injected fuel total energy amount, and an energy amount due to combustion of the fuel in a period from timing at which a gas temperature in the cylinder has reached a low-temperature oxidation reaction start temperature of the fuel to timing at which the gas temperature has reached a high-temperature oxidation reaction start temperature is a low-temperature oxidation reaction energy amount, the cetane number determination device is configured to determine the cetane number of the fuel on the basis of a ratio of the low-temperature oxidation reaction energy amount to the injected fuel total energy amount in the case where fuel injection from the fuel injection valve has completed before the gas temperature in the cylinder reaches the high-temperature oxidation reaction start temperature. Specifically, as the ratio of the low-temperature oxidation reaction energy amount to the injected fuel total energy amount increases, the cetane number of the fuel is determined to be higher.

With this defining matter, when the fuel (light oil) is injected into the cylinder, the low-temperature oxidation reaction component of n-cetane, and the like, contained in the fuel starts combustion from the timing at which the gas temperature in the cylinder has reached the low-temperature oxidation reaction start temperature of the fuel. When fuel injection from the fuel injection valve into the cylinder completes before the gas temperature in the cylinder reaches the high-temperature oxidation reaction start temperature of the fuel, all or almost all the low-temperature oxidation reaction component, that is, the n-cetane, and the like, contained in the fuel completes combustion by the time when the gas temperature in the cylinder reaches the high-temperature oxidation reaction start temperature. That is, in the period up to the timing at which the gas temperature in the cylinder reaches the high-temperature oxidation reaction start temperature, only the low-temperature oxidation reaction component of the fuel combusts, and combustion of the high-temperature oxidation reaction component is not yet started. Therefore, the ratio between the low-temperature oxidation reaction energy amount, which is the energy amount resulting from combustion of the fuel in this period, and the injected fuel total energy amount, which is the total energy amount of the fuel injected into the cylinder, is obtained as a value that highly correlates with the cetane number of the fuel, so it is possible to determine the cetane number of the fuel on the basis of this ratio. By defining the period in which the energy amount (low-temperature oxidation reaction energy amount) is acquired on the basis of the gas temperature in the cylinder in this way, it is possible to acquire the energy amount resulting from combustion of the low-temperature oxidation reaction component with high accuracy, so it is possible to improve the cetane number determination accuracy.

As a method of calculating the low-temperature oxidation reaction energy amount, specifically, measuring the energy amount due to combustion of the fuel is started from the timing at which the gas temperature in the cylinder has reached the low-temperature oxidation reaction start temperature of the fuel, measuring the energy amount is completed at the timing at which the gas temperature in the cylinder has reached the high-temperature oxidation reaction start temperature of the fuel, and the accumulated energy amount is acquired as the low-temperature oxidation reaction energy amount.

By defining the measuring period of the energy amount in this way, it is possible to accurately obtain the low-temperature oxidation reaction energy amount without almost any influence of disturbance (such as thermal energy of coolant).

The execution condition of cetane number determination operation for further increasing the cetane number determination accuracy is listed below. That is, determination of the cetane number of the fuel based on the ratio of the low-temperature oxidation reaction energy amount to the injected fuel total energy amount is configured to be carried out in the case where fuel injection from the fuel injection valve has completed before reaching the low-temperature oxidation reaction start temperature that is further lower than the high-temperature oxidation reaction start temperature of the fuel.

With this configuration, at the timing at which the gas temperature in the cylinder has reached the high-temperature oxidation reaction start temperature, combustion of the entire low-temperature oxidation reaction component, that is, the n-cetane, and the like, contained in the fuel is highly likely to be complete, so it is possible to obtain the low-temperature oxidation reaction energy amount based on the amount of the n-cetane, and the like, with high accuracy. Therefore, it is possible to further increase the accuracy of determining the cetane number of the fuel based on the ratio of the low-temperature oxidation reaction energy amount to the injected fuel total energy amount.

As specific values of the temperatures, the low-temperature oxidation reaction start temperature is about 750K, and the high-temperature oxidation reaction start temperature is about 900K.

The cetane number determination operation is executed at least on the condition that learning control over a fuel injection amount from the fuel injection valve is complete and the in-cylinder temperature in the cylinder in a compression stroke is lower than the low-temperature oxidation reaction start temperature.

The reason why the fact that learning control over the fuel injection amount is complete is set for the condition is to accurately calculate the total energy amount. The reason why the fact that the in-cylinder temperature in the cylinder in the compression stroke is lower than the low-temperature oxidation reaction start temperature is set for the condition is to increase the accuracy of calculating the low-temperature oxidation reaction energy amount by subjecting the n-cetane, and the like, in the fuel injected from the fuel injection valve to premixing combustion. Learning control over the fuel injection amount includes known small fuel injection amount learning control (control for learning whether there is a deviation in the fuel injection amount on the basis of whether a variation amount in the engine operating state coincides with a prescribed variation amount at the time when fuel injection in a small amount is carried out with no load on the internal combustion engine), and the like.

Operation to determine the cetane number is executed by carrying out fuel injection with no load on the internal combustion engine.

With this configuration, it is possible to determine the cetane number through fuel injection at timing at which the traveling performance of the vehicle is not influenced, so drivability does not deteriorate through the cetane number determination operation.

### EFFECT OF THE INVENTION

In the invention, the cetane number of the fuel is determined on the basis of the ratio of the low-temperature oxidation reaction energy amount to the injected fuel total energy amount. By defining the period in which the low-temperature oxidation reaction energy amount is acquired on the basis of the gas temperature in the cylinder in this way, it is possible to acquire the energy amount resulting from combustion of the low-temperature oxidation reaction component with high accuracy, and it is possible to improve the cetane number determination accuracy.

### BRIEF DESCRIPTION OF THE DRAWINGS

[FIG. 1] FIG. 1 is a view that shows the schematic configuration of an engine and its control system according to an embodiment.
[FIG. 2] FIG. 2 is a cross-sectional view that shows each combustion chamber of the diesel engine and its peripheral portion.
[FIG. 3] FIG. 3 is a block diagram that shows the configuration of a control system, such as an ECU.
[FIG. 4] FIG. 4 is a flowchart that shows the procedure of cetane number determination operation and engine control operation according to a first embodiment.
[FIG. 5] FIG. 5 is a view that shows an example of a cetane number determination map.
[FIG. 6] FIG. 6 is a graph that shows a variation in each of a heat release rate, an in-cylinder gas temperature, an accumulated heat generation amount and a fuel injection rate in the case where the in-cylinder temperature has reached 750K before fuel injection completes.
[FIG. 7] FIG. 7 is a graph that shows a variation in each of a heat release rate, an in-cylinder gas temperature, an accumulated heat generation amount and a fuel injection rate at the time when small fuel injection is carried out in the case where fuel injection completes before the in-cylinder temperature reaches 750K.
[FIG. 8] FIG. 8 is a flowchart that shows the procedure of cetane number determination operation and engine control operation according to a second embodiment.

### MODES FOR CARRYING OUT THE INVENTION

Hereinafter, an embodiment of the invention will be described with reference to the drawings. In the present embodiment, the case where the invention is applied to a common-rail in-cylinder direct-injection multi-cylinder (for example, in-line four-cylinder) diesel engine (compression self-ignition internal combustion engine) mounted on an automobile will be described.

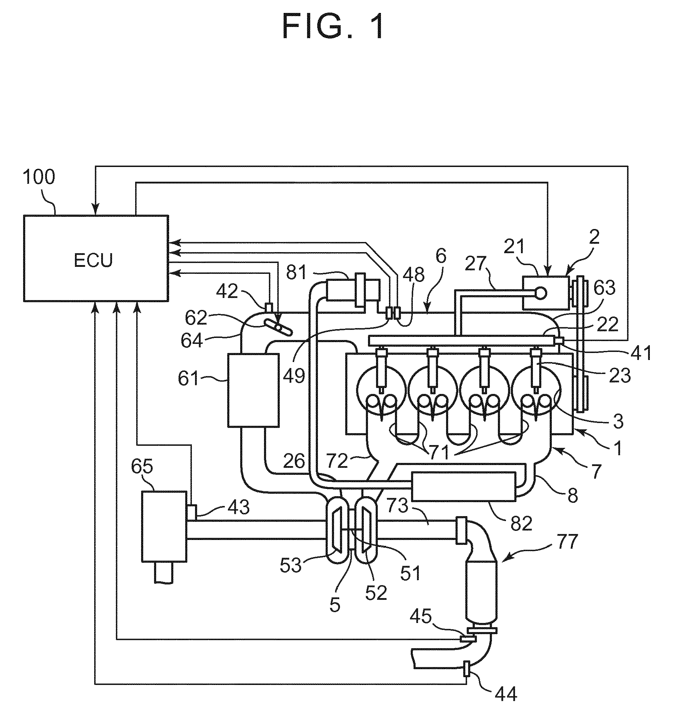

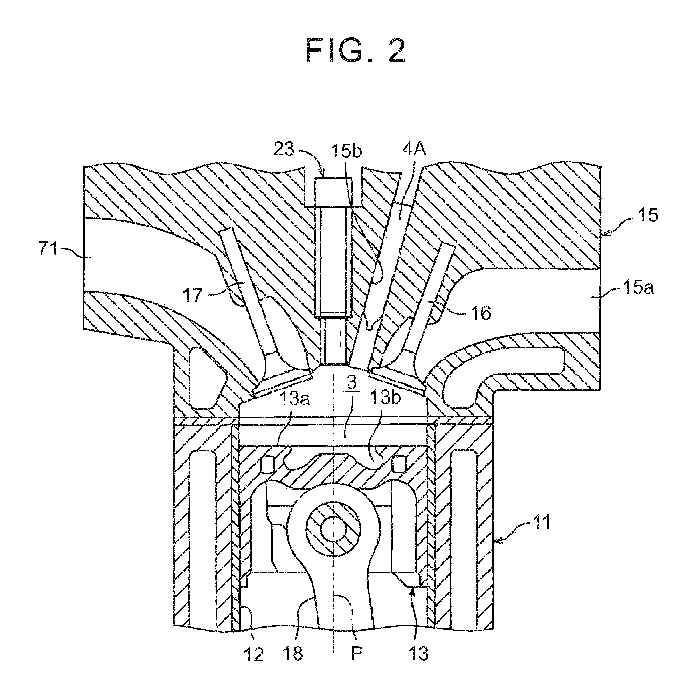

Configuration of Engine Initially, the schematic configuration of the diesel engine (hereinafter, simply referred to as engine) according to the present embodiment will be described. FIG. 1 is a schematic configuration view of the engine 1 and its control system according to the present embodiment. FIG. 2 is a cross-sectional view that shows each combustion chamber 3 of the diesel engine and its peripheral portion.

As shown in FIG. 1, the engine 1 according to the present embodiment is configured as a diesel engine system including a fuel supply system 2, the combustion chambers 3, an intake system 6, an exhaust system 7, and the like, as major components.

The fuel supply system 2 is configured to include a supply pump 21, a common rail 22, injectors (fuel injection valves) 23, an engine fuel passage 27, and the like.

The above supply pump 21 draws fuel from a fuel tank, pressurizes the drawn fuel to a high pressure, and then supplies the fuel to the common rail 22 via the engine fuel passage 27. The common rail 22 has the function of an accumulation chamber that keeps (accumulates) high-pressure fuel at a predetermined pressure, and distributes the accumulated fuel to the injectors 23. Each injector 23 is formed of a piezoelectric injector that includes a piezoelectric element inside and appropriately opens to inject and supply fuel into a corresponding one of the combustion chambers 3.

The intake system 6 includes an intake manifold 63 that is connected to intake ports 15a formed in a cylinder head 15 (see FIG. 2). An intake pipe 64 that constitutes an intake passage is connected to the intake manifold 63. In the intake passage, an air cleaner 65, an air flow meter 43 and a throttle valve (intake throttle valve) 62 are arranged in order from an upstream side. The air flow meter 43 outputs an electric signal corresponding to the amount of air that flows into the intake passage via the air cleaner 65.

The exhaust system 7 includes an exhaust manifold 72 that is connected to exhaust ports 71 formed in the cylinder head 15. An exhaust pipe 73 that constitutes an exhaust passage is connected to the exhaust manifold 72. An exhaust emission control device 77 is arranged in the exhaust passage. The exhaust emission control device 77 includes a catalyst (an NOx occlusion catalyst or an oxidation catalyst) and a DPF (diesel particulate filter). A DPNR catalyst (diesel particulate-NOx reduction catalyst) may be employed as the exhaust emission control device 77.

Here, the configuration of each combustion chamber 3 of the diesel engine and its peripheral portion will be described with reference to FIG. 2. As shown in FIG. 2, a cylindrical cylinder bore 12 is formed for each of the cylinders (four cylinders) in a cylinder block 11 that constitutes part of an engine body, and a piston 13 is accommodated inside each cylinder bore 12 so as to be slidable in the vertical direction.

The combustion chamber 3 is formed on the upper side of a top face 13a of each piston 13. That is, each combustion chamber 3 is defined by the lower face of the cylinder head 15 connected to the upper portion of the cylinder block 11, the inner wall face of the corresponding cylinder bore 12 and the top face 13a of the corresponding piston 13. A cavity (recessed portion) 13b is recessed at substantially the center portion of the top face 13a of each piston 13, and the cavity 13b also constitutes part of the corresponding combustion chamber 3.

Each piston 13 is coupled to a crankshaft, which is an engine output shaft, by a connecting rod 18. Thus, the reciprocal movement of each piston 13 in the cylinder bore 12 is transmitted to the crankshaft via the corresponding connecting rod 18, and the crankshaft is rotated. Thus, engine output is obtained.

In the above cylinder head 15, the intake ports 15a and the exhaust ports 71 are formed, and intake valves 16 that open or close the intake ports 15a and exhaust valves 17 that open or close the exhaust ports 71 are arranged. The injectors 23 that directly inject fuel into the combustion chambers 3 are installed at the cylinder head 15. Each injector 23 is arranged at substantially the center upper portion of the corresponding combustion chamber 3 in an upright position along a cylinder central axis P, and injects fuel, which is introduced from the common rail 22, toward the corresponding combustion chamber 3 at predetermined timing.

Furthermore, as shown in FIG. 1, the engine 1 is provided with a supercharger (turbocharger) 5. The turbocharger 5 includes a turbine wheel 52 and a compressor wheel 53, which are coupled to each other via a turbine shaft 51. The compressor wheel 53 is arranged inside the intake pipe 64, and the turbine wheel 52 is arranged inside the exhaust pipe 73. Therefore, the turbocharger 5 carries out so-called supercharging operation in which intake pressure is increased by rotating the compressor wheel 53 with the use of exhaust flow (exhaust pressure) received by the turbine wheel 52. The turbocharger 5 in the present embodiment is a variable nozzle turbocharger, includes a variable nozzle vane mechanism (not shown) at the turbine wheel 52 side, and is able to adjust the supercharging pressure of the engine 1 by adjusting the opening degree of the variable nozzle vane mechanism.

An intercooler 61 for forcibly cooling intake air increased in temperature through supercharging of the turbocharger 5 is provided in the intake pipe 64 of the intake system 6.

The engine 1 is provided with an exhaust gas recirculation passage (EGR passage) 8 that connects the intake system 6 to the exhaust system 7. The EGR passage 8 decreases the combustion temperature by recirculating part of exhaust gas to the intake system 6 as needed and supplying the part of exhaust gas to the combustion chambers 3 again. Thus, the EGR passage 8 reduces the amount of NOx generated. An EGR valve 81 and an EGR cooler 82 are provided in the EGR passage 8. The EGR valve 81 is steplessly opened or closed through electronic control, and is able to freely adjust the flow rate of exhaust gas flowing through the passage. The EGR cooler 82 is used to cool exhaust gas that passes (is recirculated) through the EGR passage 8. An EGR device (exhaust gas recirculation device) is formed of these EGR passage 8, EGR valve 81, EGR cooler 82, and the like.

### Sensors

Various sensors are installed at portions of the engine 1, and output environmental conditions of the respective portions and signals relating to the operating state of the engine 1.

For example, the air flow meter 43 outputs a detection signal corresponding to the flow rate of intake air (intake air amount) at a portion upstream of the throttle valve 62 in the intake system 6. An intake air temperature sensor 49 is arranged in the intake manifold 63, and outputs a detection signal corresponding to the temperature of intake air. An intake air pressure sensor 48 is arranged in the intake manifold 63, and outputs a detection signal corresponding to an intake air pressure. An A/F (air-fuel ratio) sensor 44 outputs a detection signal, which continuously varies with an oxygen concentration in exhaust gas, at a portion downstream of the exhaust emission control device 77 in the exhaust system 7. An exhaust gas temperature sensor 45 similarly outputs a detection signal corresponding to the temperature of exhaust gas (exhaust gas temperature) at a portion downstream of the exhaust emission control device 77 in the exhaust system 7. A rail pressure sensor 41 outputs a detection signal corresponding to the pressure of fuel that is stored in the common rail 22. A throttle opening degree sensor 42 detects the opening degree of the throttle valve 62.

### ECU

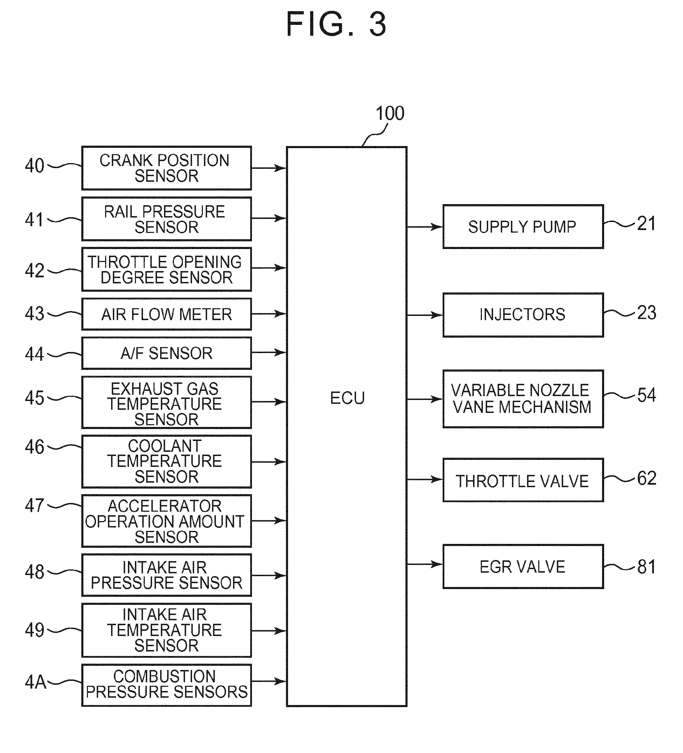

The ECU 100 includes a microcomputer and input/output circuits. The microcomputer is formed of a CPU, a ROM, a RAM, and the like (not shown). As shown in FIG. 3, the rail pressure sensor 41, the throttle opening degree sensor 42, the air flow meter 43, the A/F sensor 44, the exhaust gas temperature sensor 45, the intake air pressure sensor 48 and the intake air temperature sensor 49 are connected to the input circuit of the ECU 100. In addition, a coolant temperature sensor 46, an accelerator operation amount sensor 47, a crank position sensor 40, CPSs (combustion pressure sensors) 4A, and the like, are connected to the input circuit. The coolant temperature sensor 46 outputs a detection signal corresponding to the coolant temperature of the engine 1. The accelerator operation amount sensor 47 outputs a detection signal corresponding to the depression amount of an accelerator pedal. The crank position sensor 40 outputs a detection signal (pulse) each time the output shaft (crankshaft) of the engine 1 rotates a set angle. The CPSs 4A detect corresponding in-cylinder pressures. As shown in FIG. 2, each combustion pressure sensor 4A is held in a sensor mounting hole 15b, formed in correspondence with each cylinder in the cylinder head 15, via a sensor adapter (not shown), and detects the pressure in the corresponding cylinder.

On the other hand, the supply pump 21, the injectors 23, the throttle valve 62, the EGR valve 81 and the variable nozzle vane mechanism (actuator that adjusts the opening degree of a variable nozzle vane) 54 of the turbocharger 5 are connected to the output circuit of the ECU 100.

The ECU 100 executes various controls over the engine 1 on the basis of outputs from the above-described various sensors, computed values obtained through arithmetic expressions that utilize the output values, or various maps stored in the ROM.

For example, the ECU 100 carries out pilot injection (auxiliary injection) and main injection (main injection) as fuel injection control over the injectors 23.

The pilot injection is operation to inject fuel in a small amount from the injector 23 in advance of main injection. The pilot injection is injection operation for leading to stable diffuse combustion by suppressing an ignition delay of fuel through main injection, and is also called auxiliary injection.

The main injection is injection operation for generating torque of the engine 1 (operation to supply torque generating fuel). An injection amount in the main injection is basically determined such that a required torque is obtained on the basis of the operating state, such as the engine rotation speed, the accelerator operation amount, the coolant temperature and the intake air temperature. For example, as the engine rotation speed (the engine rotation speed that is calculated on the basis of the detected value of the crank position sensor 40) increases, and, as the accelerator operation amount (the depression amount of the accelerator pedal, which is detected by the accelerator operation amount sensor 47) increases (as the accelerator operation amount increases), a higher torque required value of the engine 1 is obtained, and a fuel injection amount in main injection is set to be larger accordingly.

As an example of a specific fuel injection mode, the pilot injection (fuel injection from a plurality of injection holes formed in the injector 23) is carried out before the piston 13 reaches a compression top dead center, fuel injection is once stopped, and then the main injection is carried out at the timing at which the piston 13 has reached near the compression top dead center after a lapse of a predetermined interval. Thus, fuel combusts through self-ignition, and energy generated by the combustion becomes kinetic energy for pushing the piston 13 downward toward a bottom dead center (energy that becomes engine output), thermal energy that increases the temperature in the combustion chamber 3, and thermal energy that is released to an outside (for example, coolant) via the cylinder block 11 and the cylinder head 15.

In addition to the above-described pilot injection and main injection, after-injection or post injection is carried out where necessary. The functions of these injections are known, so the description is omitted here.

The ECU 100 controls the opening degree of the EGR valve 81 on the basis of the operating state of the engine 1, and adjusts the exhaust gas recirculation amount (EGR amount) toward the intake manifold 63. The EGR amount is generated through an experiment, simulation, or the like, in advance, and is set in accordance with an EGR map stored in the ROM. The EGR map is a map for determining an EGR amount (EGR rate) by using the engine rotation speed and the engine load as parameters.

A fuel injection pressure at the time of carrying out fuel injection is determined by the internal pressure in the common rail 22. As the common rail internal pressure, a target value of fuel pressure that is generally supplied from the common rail 22 to the injectors 23, that is, a target rail pressure , is set to be higher as the engine load (engine load) increases and as the engine rotation speed (engine rotation speed) increases. The target rail pressure is, for example, set in accordance with the a fuel pressure setting map stored in the ROM. In the present embodiment, the fuel pressure is adjusted between 30 MPa and 200 MPa on the basis of the engine load, and the like.

The ECU 100 determines the fuel injection amount and the fuel injection mode on the basis of the engine operating state. Specifically, the ECU 100 calculates the engine rotation speed on the basis of the detected value of the crank position sensor 40, obtains the depression amount of the accelerator pedal (accelerator operation amount) on the basis of the detected value of the accelerator operation amount sensor 47, and determines the total fuel injection amount (the sum of the injection amount in pilot injection and the injection amount in main injection) on the basis of the engine rotation speed and the accelerator operation amount.

### Small Fuel Injection Amount Learning Control

The engine 1 according to the present embodiment undergoes small fuel injection amount learning control (also referred to as small injection control or small Q control) for correcting a deviation of the fuel injection amount from each injector 23. Hereinafter, the outline of the small fuel injection amount learning control will be described.

The small fuel injection amount learning control is, for example, control for acquiring a learning value corresponding to a temporal variation in fuel injection amount of each injector 23 (variation in injection characteristic). That is, this is control for acquiring a learning value that does not cause a deviation between a target small fuel injection amount (a command value of a small fuel injection amount: target fuel injection amount) and an actual small fuel injection amount (actual fuel injection amount).

The small fuel injection amount learning control is carried out while the automobile is traveling with no load on the engine. Specifically, single injection in fuel of an extremely small amount equivalent to a pilot injection amount is carried out toward a specific cylinder (cylinder in which the piston 13 is located near the compression top dead center) during no injection in which a command injection amount to each injector 23 is zero (for example, when the accelerator operation amount becomes "0" during traveling, or the like), and a variation amount, or the like, of the engine rotation speed (a variation amount of the engine operating state) resulting from the single injection is observed. Variation data of the engine operating state in the case where single injection in a predetermined amount is carried out accurately are compared with a variation amount of the engine operating state in the case where single injection is actually carried out, and a learning value of a pilot injection amount setting map (map in which the correlation between a plot injection amount and a duration of energization to the injector 23 (valve opening duration) is stored cylinder by cylinder (injector by injector)) is corrected on the basis of the deviation amount. Such operation is executed for each common-rail pressure and each cylinder in the pilot injection amount setting map, pilot injection is allowed to be carried out to all the cylinders in an appropriate pilot injection amount irrespective of the common-rail pressure.

The mode of fuel injection into the cylinder at the time when the small fuel injection amount learning control is executed is to inject fuel in an extremely small amount (for example, 2.0 mm³) equivalent to the pilot injection amount at the timing at which the position of the piston 13 of the cylinder in the compression stroke has reached the compression top dead center (TDC). The reason why fuel is injected at this timing is to cause substantially the entire amount of the fuel to combust in a short period by carrying out fuel injection at the timing at which the in-cylinder temperature is the highest (timing at which air in the cylinder is compressed the most).

### Cetane Number Determination Operation

Next, cetane number determination operation that is the characteristic operation of the present embodiment will be described.

The cetane number determination operation is used to determine the cetane number of the fuel (light oil) that is currently used in the engine 1, that is, the fuel that is stored in a fuel tank and to put the cetane number to use in engine control based on the cetane number.

Initially, the outline of the cetane number determination operation will be described. In light oil that is the fuel of the diesel engine 1, a low-temperature oxidation reaction component (such as a fuel having a straight-chain single-bond composition, that is, n-cetane (C₁₆H₃₄), and the like) is contained. The n-cetane, and the like, are ignitable components even when the in-cylinder temperature is relatively low, and the low-temperature oxidation reaction easily proceeds in the cylinder and an ignition delay is suppressed as the amount of n-cetane, and the like, increases (as it is a fuel having a higher cetane content). Specifically, the n-cetane, and the like, start combustion (low-temperature oxidation reaction) at the timing at which the in-cylinder temperature has reached about 750K. On the other hand, a fuel component other than the n-cetane, and the like (high-temperature oxidation reaction component) does not start combustion (high-temperature oxidation reaction) until the in-cylinder temperature reaches about 900K.

Therefore, where the amount of thermal energy in the case where it is assumed that the entire fuel injected from the injector 23 has combusted is termed "total energy amount" and the amount of thermal energy generated through combustion in a period from when the in-cylinder temperature becomes 750K (low-temperature oxidation reaction start temperature) to when the in-cylinder temperature becomes 900K (high-temperature oxidation reaction start temperature) is termed "low-temperature oxidation reaction energy amount", the ratio of the low-temperature oxidation reaction energy amount to the total energy amount (hereinafter, referred to as "energy ratio") is obtained as a value that correlates with the cetane number.

In order to accurately calculate the energy ratio corresponding to the cetane number, combustion of substantially the entire n-cetane, and the like (low-temperature oxidation reaction component) is required to be complete at the timing at which the in-cylinder temperature reaches 900K. This is because, when there remains unburned n-cetane, and the like, at the timing at which the in-cylinder temperature has reached 900 K, combustion of the low-temperature oxidation reaction component (n-cetane, and the like) and combustion of the high-temperature oxidation reaction component that is a component other than the low-temperature oxidation reaction component proceed at the same time after the in-cylinder temperature has reached 900K, and it is not possible to acquire an energy amount through combustion of only the low-temperature oxidation reaction component. Therefore, in the cetane number determination operation in the present embodiment, the injection completion timing of fuel that is injected into the cylinder is set to timing before the in-cylinder temperature reaches 900K, more desirably, before the in-cylinder temperature reaches 750K, and all or almost all the combustion of the low-temperature oxidation reaction component is completed at the timing at which combustion of the high-temperature oxidation reaction component is started (timing at which the in-cylinder temperature has reached 900K).

Hereinafter, a plurality of embodiments of the cetane number determination operation will be described. The following first embodiment is to execute the cetane number determination operation on the condition that injection of fuel is complete before the in-cylinder temperature reaches 900K. The following second embodiment is to execute the cetane number determination operation on the condition that injection of fuel is complete before the in-cylinder temperature reaches 750K. In each of the following embodiments, the case where the cetane number determination operation is executed with no load on the engine while the automobile is traveling will be described. That is, as in the case of the above-described small fuel injection amount learning control, the cetane number determination operation is executed by single-shot fuel injection in an extremely small amount equivalent to the amount of pilot injection, toward the specific cylinder (cylinder in the compression stroke) into the cylinder. The fuel injection amount in the cetane number determination operation is not limited to the above-described one and may be set as needed.

### (First Embodiment)

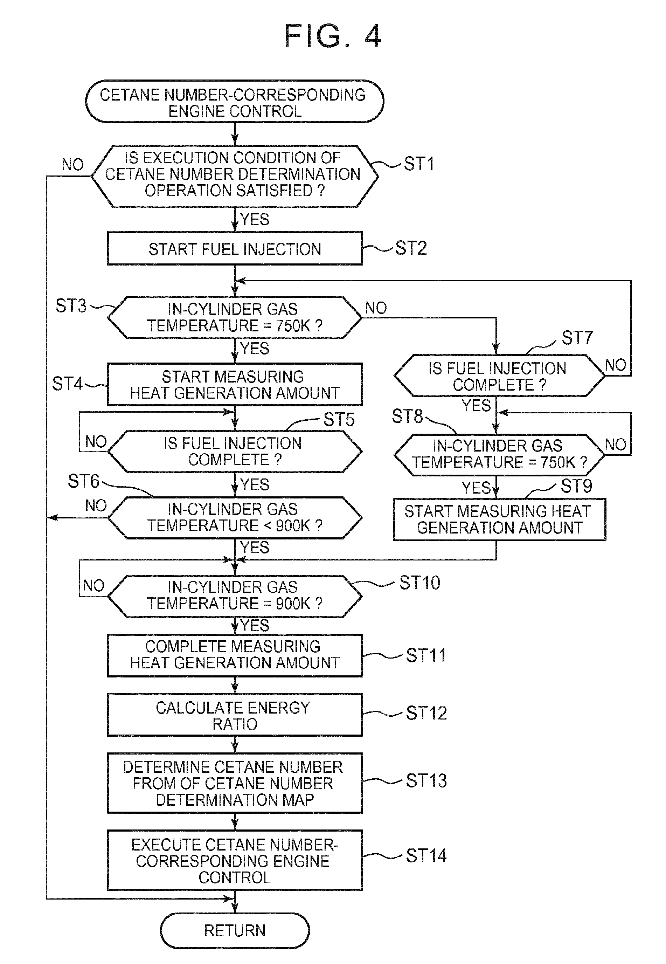

Initially, the first embodiment will be described. FIG. 4 is a flowchart that shows the procedure of the cetane number determination operation and the engine control operation in the present embodiment. This operation is executed each time the travel distance of the vehicle reaches a predetermined distance (for example, 500 km). Alternatively, the operation is executed at the time when the vehicle travels after the fuel tank is fed with fuel.

Initially, in step ST1, it is determined whether the execution condition of the cetane number determination operation is satisfied. For example, it is determined that the execution condition of the cetane number determination operation is satisfied when all the following conditions are satisfied.
(a) The above-described small fuel injection amount learning control is complete.
(b) The piston position of the cylinder in the compression stroke has become 20° before the compression top dead center (BTDC).
(c) The in-cylinder temperature is lower than 750K.

The reason why the fact that the small fuel injection amount learning control is complete is set for the condition is to accurately calculate the total energy amount. The reason why the fact that the piston position of the cylinder in the compression stroke has become 20° before the compression top dead center (BTDC) is to suppress deterioration of ignitability due to excessive diffusion of fuel. The value (BTDC20°) is not limited to this value. The reason why the fact that the in-cylinder temperature is lower than 750K is set for the condition is to increase the accuracy of calculating the low-temperature oxidation reaction energy amount by subjecting n-cetane, and the like, in injected fuel to premixing combustion. These conditions are not limited to them but they may be set as needed. For example, instead of the above conditions (b), (c), the fact that the in-cylinder temperature of the cylinder in the compression stroke has reached 600K may be set for the condition.

When the execution condition of the cetane number determination operation is not satisfied and negative determination is made in step ST1, that is, for example, when the small fuel injection amount learning control is not complete and the accuracy of the fuel injection amount is not sufficiently obtained or when the in-cylinder temperature is already higher than or equal to 750K, it is determined that the cetane number determination operation is disabled, and the process is returned.

When the execution condition of the cetane number determination operation is satisfied and affirmative determination is made in step ST1, the process proceeds to step ST2, and fuel injection from the injector 23 is started. The amount of fuel that is injected here is set so as to be equivalent to the fuel injection amount in the small fuel injection amount learning control. That is, small injection of fuel is carried out at the time when the piston 13 has reached the compression top dead center (TDC) in the small fuel injection amount learning control; whereas small injection is carried out at the timing at which the piston 13 has reached 20° before the compression top dead center (BTDC) in this cetane number determination operation. As described above, the execution condition of the cetane number determination operation includes the fact that the small fuel injection amount learning control is complete; however, small injection here is not for injection amount learning control (control for correcting a deviation of the fuel injection amount, and is small injection exclusive to cetane number determination.

After the small injection of fuel is started, the process proceeds to step ST3, and it is determined whether the in-cylinder gas temperature has reached 750K. An in-cylinder gas temperature is recognized through calculation based on the output of the combustion pressure sensor 4A. That is, the in-cylinder gas temperature (T) is calculated from the known equation of state of gas (PV = nRT). Here, the in-cylinder volume (V) is determined on the basis of the specifications (the cylinder bore and the stroke of the piston, and the like) of the engine and the crank angle position. The amount of substance of gas (n) and a gas constant (R) are obtained on the basis of the intake air amount that is detected by the air flow meter 43, the outside air temperature, the fuel injection amount from the injector 23, and the like.

At the start timing of fuel injection, the in-cylinder gas temperature is lower than 750 K (as described above, the fact that the in-cylinder temperature is lower than 750K is set for the execution condition of the cetane number determination operation), so negative determination is made in step ST3, and the process proceeds to step ST7. In step ST7, it is determined whether fuel injection from the injector 23 is complete, that is, whether fuel injection (injection of a small fuel injection amount (for example, 2.0 mm³)) has completed by the time when the in-cylinder gas temperature reaches 750K.

When fuel injection has not completed yet and negative determination is made in step ST7, the process returns to ST3, and it is determined whether the in-cylinder gas temperature has reached 750K.

When the in-cylinder gas temperature has reached 750K (when the in-cylinder gas temperature has reached 750K because of compression of air, or the like) by the time when fuel injection completes, affirmative determination is made in step ST3, the process proceeds to step ST4, and measuring the heat generation amount that is generated through combustion of fuel in the cylinder is started. In measuring the heat generation amount, the output value of the combustion pressure sensor 4A is converted to a heat generation amount by a predetermined conversion mathematical expression or a heat generation amount calculation map prestored in the ROM, and the heat generation amount generated in this cylinder is accumulated until the completion timing of measuring of the heat generation amount (until affirmative determination is made in step ST10 (described later), and measuring of the heat generation amount completes in step ST11). The accumulated value is a value corresponding to the low-temperature oxidation reaction energy amount.

After measuring of the heat generation amount is started in this way, the process proceeds to step ST5, and it is determined whether fuel injection from the injector 23 has completed, that is, whether injection of the small fuel injection amount has completed.

When fuel injection has not completed yet and negative determination is made in step ST5, completion of fuel injection is waited. At this time, because the in-cylinder gas temperature has already reached 750K, while fuel injection is continued, the n-cetane, and the like, contained in the fuel start combustion, and the in-cylinder temperature increases accordingly. When fuel injection completes and affirmative determination is made in step ST5, the process proceeds to step ST6, and it is determined whether the in-cylinder gas temperature is lower than 900K, that is, whether the in-cylinder gas temperature at the timing at which fuel injection has completed is lower than 900K (high-temperature oxidation reaction start temperature).

Here, when the in-cylinder gas temperature at the timing at which fuel injection has completed is higher than or equal to 900K and negative determination is made in step ST6, it is determined that combustion of the fuel component other than the n-cetane, and the like (high-temperature oxidation reaction component), has already started and it is difficult to measure the heat generation amount through combustion of only the n-cetane, and the like (low-temperature oxidation reaction component), the cetane number determination operation is cancelled, and the process is returned.

On the other hand, when the in-cylinder gas temperature at the timing at which fuel injection has completed is lower than 900K and affirmative determination is made in step ST6, it is determined that the fuel component that is currently combusting is only the n-cetane, and the like (low-temperature oxidation reaction component), the process proceeds to step ST10, and it is determined whether the in-cylinder gas temperature has reached 900K (whether the in-cylinder gas temperature has reached a temperature at which combustion of the high-temperature oxidation reaction component is started). The in-cylinder gas temperature is also recognized through calculation based on the output of the combustion pressure sensor 4A as in the case of the step ST3.

When the in-cylinder gas temperature has not reached 900K yet and negative determination is made in step ST10, a situation that the in-cylinder gas temperature reaches 900K is waited. In this case, the in-cylinder temperature further increases toward 900K because of generation of the amount of heat caused by combustion of only the n-cetane, and the like (low-temperature oxidation reaction component), and compression of air due to movement of the piston 13 toward the compression top dead center. When the in-cylinder gas temperature reaches 900K and affirmative determination is made in step ST10, the process proceeds to step ST11, and measuring of the heat generation amount is completed.

On the other hand, when fuel injection (injection of a small fuel injection amount) has completed by the time when the in-cylinder gas temperature reaches 750K, affirmative determination is made in step ST7, and the process proceeds to step ST8. In this step ST8, it is determined whether the in-cylinder gas temperature has reached 750K. The determination is carried out as in the case of the above step ST3.

When the in-cylinder temperature is lower than 750K and negative determination is made in step ST8, a situation that the in-cylinder gas temperature reaches 750K is waited. In this case, the in-cylinder temperature increases toward 750K because of compression of air due to movement of the piston 13 toward a position before the compression top dead center. When the in-cylinder gas temperature has reached 750K and affirmative determination is made in step ST8, the process proceeds to step ST9, and measuring of the heat generation amount that is generated through combustion of fuel in the cylinder is started. This measuring of the heat generation amount is carried out as in the case of the above-described step ST4.

After measuring of the heat generation amount is started in this way, the process proceeds to step ST10, and, as in the case of the above, it is determined whether the in-cylinder gas temperature has reached 900K (whether the in-cylinder gas temperature has reached the temperature at which combustion of the high-temperature oxidation reaction component is started). When the in-cylinder gas temperature has reached 900K and affirmative determination is made in step ST10, the process proceeds to step ST11, and measuring of the heat generation amount is completed.

When measuring of the heat generation amount is completed as described above, the process proceeds to step ST12, and the energy ratio is calculated. That is, the ratio (low-temperature oxidation reaction energy amount / total energy amount) of the low-temperature oxidation reaction energy amount (which corresponds to the heat generation amount accumulated in a period from when the in-cylinder gas temperature has reached 750K to when the in-cylinder gas temperature reaches 900K) with respect to the total energy amount that is the thermal energy amount is calculated in the case where it is assumed that the entire fuel injected from the injector 23 has combusted.

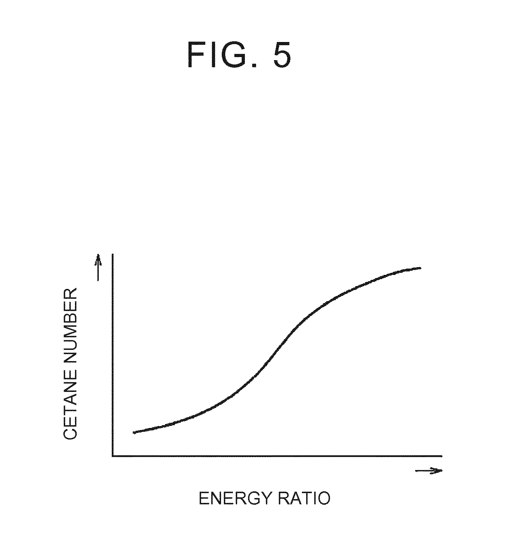

In step ST13, the cetane number is determined on the basis of the calculated energy ratio. A cetane number determination map is utilized to determine the cetane number. FIG. 5 is a view that shows an example of the cetane number determination map. The cetane number determination map prescribes the correlation between the energy ratio and the cetane number. The cetane number determination map is generated through an experiment or simulation in advance, and is stored in the ROM. As is apparent from FIG. 5, the energy ratio and the cetane number have a one-to-one correspondence relationship. As the energy ratio increases, the cetane number also increases. An example of fuel that is determined by using the cetane number determination map will be described. For example, when, in a light oil fuel, a lower heating value (which corresponds to the total energy amount) in the case where the fuel injection amount is set to 10 mm³ is 323 J and the low-temperature oxidation reaction energy amount is 32.3 J, 0.1 is obtained as the energy ratio, and the cetane number (for example, cetane number 45) is obtained by applying the value of the energy ratio to the cetane number determination map.

After the cetane number is determined by utilizing the cetane number determination map, the process proceeds to step ST14, and engine control for adjusting the control values of control parameters, such as the injection timing and injection amount of fuel that is injected from the injector 23 is executed on the basis of the determined cetane number. For example, when the determined cetane number is relatively low, the fuel injection timing (for example, the injection timing of the pilot injection) is corrected to be advanced as the cetane number decreases. Thus, ignition timing is appropriately obtained even when an ignition delay increases because of a low cetane number. As the cetane number decreases, the fuel injection amount (for example, the injection amount in the pilot injection) is increasingly corrected. Thus, a sufficient amount of heat is obtained for in-cylinder preheating even when the heat generation amount per unit fuel is small due to the low cetane number. Other than the above, control for increasing the density of the n-cetane, and the like, in a combustion field by setting the fuel injection pressure to a lower value as the cetane number decreases, or control for increasing the combustion temperature by decreasing the EGR rate may be executed.

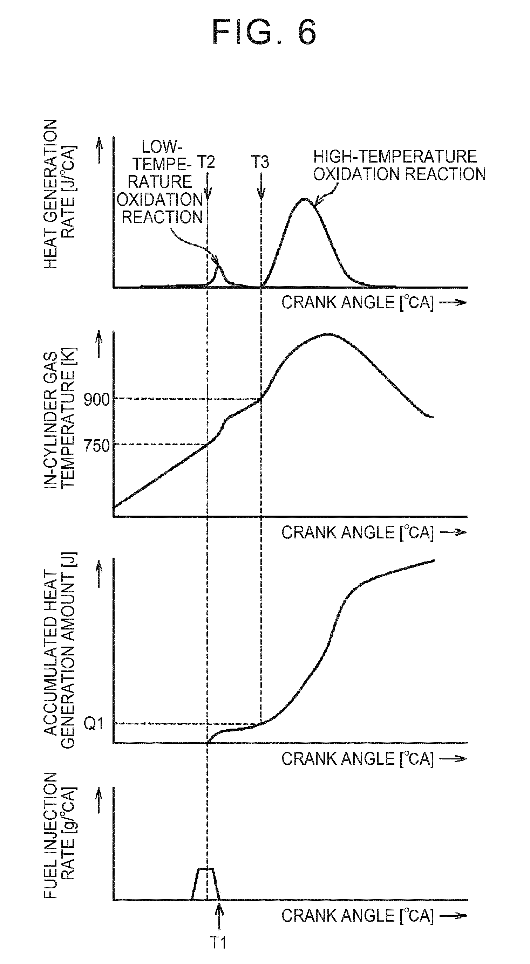

FIG. 6 is a graph that shows a variation in each of the heat release rate, the in-cylinder gas temperature, the accumulated heat generation amount and the fuel injection rate during execution of small fuel injection in the case where the in-cylinder temperature has reached 750K before fuel injection completes. In this case, the in-cylinder temperature has reached 750K (timing T2 in the graph) before passage of timing T1 at which fuel injection completes, and measuring of the heat generation amount is started from this timing. Measuring of the heat generation amount is completed at timing T3 at which the in-cylinder temperature has reached 900K, and the heat generation amount accumulated during a period from the timing T2 to the timing T3 (accumulated heat generation amount Q1 in FIG. 6) is acquired as the low-temperature oxidation reaction energy amount.

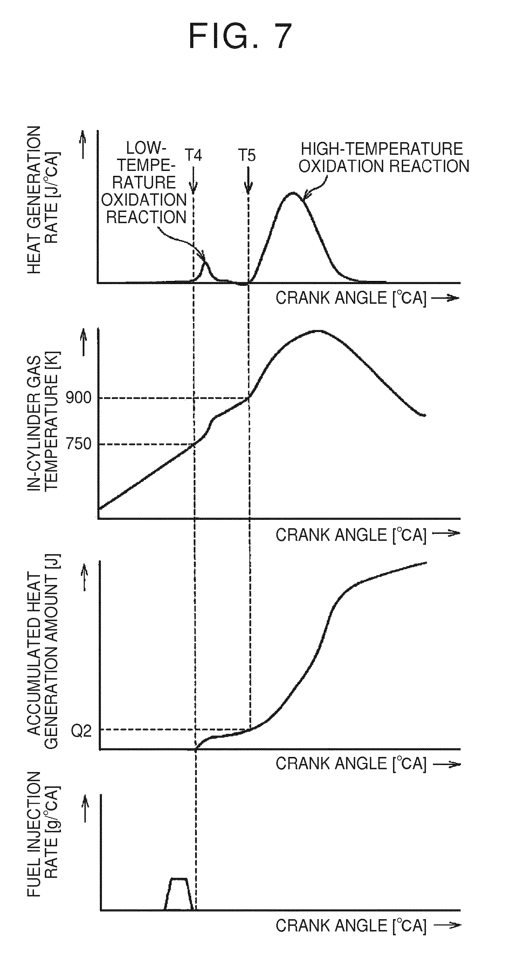

FIG. 7 is a graph that shows a variation in each of the heat release rate, the in-cylinder gas temperature, the accumulated heat generation amount and the fuel injection rate during execution of small fuel injection in the case where fuel injection has completed before the in-cylinder temperature reaches 750K. In this case, measuring of the heat generation amount is started from the timing (timing T4 in the graph) at which the in-cylinder temperature has reached 750K after fuel injection has completed. Measuring of the heat generation amount is completed at timing T5 at which the in-cylinder temperature has reached 900K, and the heat generation amount accumulated during a period from the timing T4 to the timing T5 (accumulated heat generation amount Q2 in FIG. 7) is acquired as the low-temperature oxidation reaction energy amount.

As described above, in the present embodiment, the cetane number is obtained from the energy ratio that is the ratio of the low-temperature oxidation reaction energy amount to the total energy amount. As described above, the n-cetane, and the like, which are the low-temperature oxidation reaction component, start combustion (low-temperature oxidation reaction) at the timing at which the in-cylinder temperature has reached about 750K, and most of the n-cetane, and the like, complete combustion by the time when the in-cylinder temperature reaches 900K. The fuel component other than the n-cetane, and the like (high-temperature oxidation reaction component), does not start combustion (high-temperature oxidation reaction) until the in-cylinder temperature reaches 900K. Therefore, the energy ratio is allowed to be obtained as a value that highly correlates with the cetane number of fuel, it is possible to accurately determine the cetane number of fuel on the basis of the energy ratio, so it is possible to improve the cetane number determination accuracy.

### (Second Embodiment)

Next, the second embodiment will be described. In the above first embodiment, the cetane number determination operation is executed on the condition that injection of fuel is complete before the in-cylinder temperature reaches 900K. In contrast, in the present embodiment, the cetane number determination operation is executed on the condition that injection of fuel is complete before the in-cylinder temperature reaches 750K. Hereinafter, the difference from the above-described first embodiment will be mainly described.

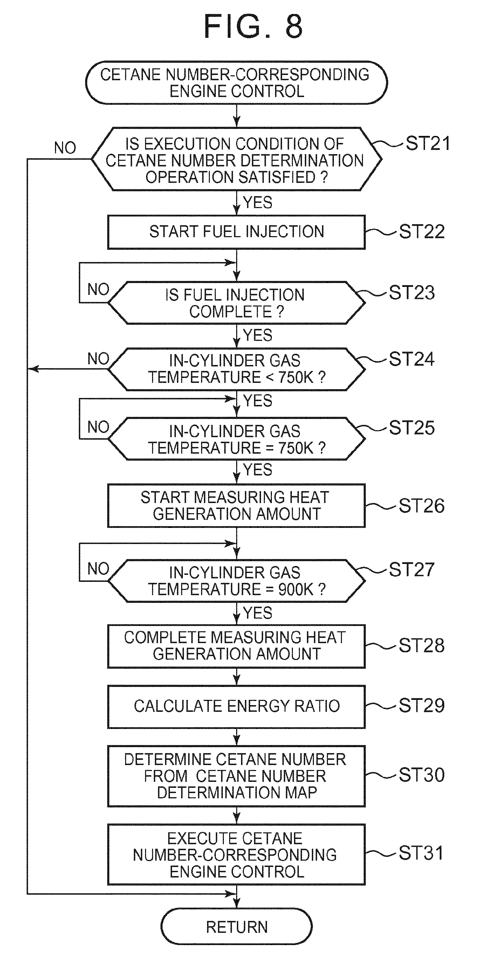

FIG. 8 is a flowchart that shows the procedure of the cetane number determination operation and the engine control operation in the present embodiment. This operation is also executed each time the travel distance of the vehicle reaches the predetermined distance (for example, 500 km). Alternatively, the operation is executed at the time when the vehicle travels after the fuel tank is fed with fuel.

Initially, in step ST21, it is determined whether the execution condition of the cetane number determination operation is satisfied. The determination condition is similar to that in the case of the above-described first embodiment.

When the execution condition of the cetane number determination operation is not satisfied and negative determination is made in step ST21, it is determined that the cetane number determination operation is disabled, and the process is returned.

When the execution condition of the cetane number determination operation is satisfied and affirmative determination is made in step ST21, the process proceeds to step ST22, and fuel injection from each injector 23 is started. The mode of injection of fuel here is similar to that in the case of step ST2 in FIG. 4 in the first embodiment.

After fuel injection is started, the process proceeds to step ST23, and it is determined whether fuel injection from the injector 23 has completed, that is, it is determined whether injection of the small fuel injection amount has completed.

When fuel injection has not completed yet and negative determination is made in step ST23, completion of fuel injection is waited. In this case, the in-cylinder temperature increases toward 750K because of compression of air due to movement of the piston 13 toward the compression top dead center.

When fuel injection completes and affirmative determination is made in step ST23, the process proceeds to step ST24, and it is determined whether the in-cylinder gas temperature is lower than 750K, that is, whether the in-cylinder gas temperature at the timing at which fuel injection has completed is lower than 750K (low-temperature oxidation reaction start temperature).

Here, when the in-cylinder gas temperature at the timing at which fuel injection has completed is higher than or equal to 750K and negative determination is made in step ST24, the process is returned without executing the cetane number determination operation.

On the other hand, when the in-cylinder gas temperature at the timing at which fuel injection has completed is lower than 750K and affirmative determination is made in step ST24, the process proceeds to step ST25, and it is determined whether the in-cylinder gas temperature has reached 750K (whether the in-cylinder gas temperature has reached a temperature at which combustion of the low-temperature oxidation reaction component is started).

When the in-cylinder gas temperature has not reached 750K yet and negative determination is made in step ST25, a situation that the in-cylinder gas temperature reaches 750K is waited. In this case, the in-cylinder temperature further increases toward 750K because of compression of air due to further movement of the piston 13 toward a position before the compression top dead center. When the in-cylinder gas temperature has reached 750K and affirmative determination is made in step ST25, the process proceeds to step ST26, and measuring of the heat generation amount that is generated through combustion of fuel in the cylinder is started. This measuring of the heat generation amount is carried out as in the case of the above-described step ST4.

After measuring of the heat generation amount is started in this way, the process proceeds to step ST27, and it is determined whether the in-cylinder gas temperature has reached 900K (whether the in-cylinder gas temperature has reached the temperature at which combustion of the high-temperature oxidation reaction component is started). When the in-cylinder gas temperature has reached 900K and affirmative determination is made in step ST27, the process proceeds to step ST28, and measuring of the heat generation amount is completed.

When measuring of the heat generation amount is completed as described above, the process proceeds to step ST29, and the energy ratio is calculated. That is, as in the case of the above-described step ST12, the ratio of the low-temperature oxidation reaction energy amount to the total energy amount (low-temperature oxidation reaction energy amount / total energy amount) is calculated.

In step ST30, the cetane number is determined on the basis of the calculated energy ratio. The cetane number determination map is utilized to determine the cetane number as in the case of the first embodiment. Here, the description of the cetane number determination map is omitted.

After the cetane number is determined by utilizing the cetane number determination map, the process proceeds to step ST31, and engine control for adjusting the control values of control parameters, such as the injection timing and injection amount of fuel that is injected from the injector 23 is executed on the basis of the determined cetane number. For example, when the determined cetane number is relatively low, the fuel injection timing (for example, the injection timing of the pilot injection) is corrected to be advanced as the cetane number decreases. Thus, ignition timing is appropriately obtained even when an ignition delay increases because of a low cetane number. As the cetane number decreases, the fuel injection amount (for example, the injection amount in the pilot injection) is increasingly corrected. Thus, a sufficient amount of heat is obtained for in-cylinder preheating even when the heat generation amount per unit fuel is small due to the low cetane number. Other than the above, control for increasing the density of the n-cetane, and the like, in a combustion field by setting the fuel injection pressure to a lower value as the cetane number decreases, or control for increasing the combustion temperature by decreasing the EGR rate may be executed.

In the present embodiment as well, the cetane number of fuel is obtained from the energy ratio that is a value that highly correlates with the cetane number of fuel, it is possible to accurately determine the cetane number of fuel, so it is possible to improve the cetane number determination accuracy. Particularly, in the case of the present embodiment, the cetane number determination operation is executed on the condition that injection of fuel is complete before the in-cylinder temperature reaches 750K. Therefore, the entire amount of the n-cetane, and the like, is allowed to be combusted at the timing at which the in-cylinder temperature has reached 900K. Thus, it is possible to further increase the cetane number determination accuracy.

### Alternative Embodiments

In each of the above-described embodiments, the case where the invention is applied to an in-line four-cylinder diesel engine mounted on an automobile is described. The invention is not limited to usage in an automobile, and is also applicable to an engine that is used in another usage. The number of cylinders and the engine type (such as an in-line engine, a V-engine and a horizontally opposed engine) are also not specifically limited.

In each of the above embodiments, the low-temperature oxidation reaction energy amount is obtained on the basis of the in-cylinder pressure that is detected by the corresponding combustion pressure sensor 4A. The invention is not limited to this configuration. The in-cylinder pressure may be estimated from the operating state (such as the engine rotation speed) of the engine 1, and the low-temperature oxidation reaction energy amount may be obtained on the basis of the estimated in-cylinder pressure.

In the first embodiment, the cetane number determination operation is executed when the in-cylinder gas temperature at the timing at which fuel injection has completed is lower than 900K. In the second embodiment, the cetane number determination operation is executed when the in-cylinder gas temperature at the timing at which fuel injection has completed is lower than 750K. The invention is not limited to this configuration. The cetane number determination operation may be executed such that the fuel injection timing and the fuel injection amount at which the in-cylinder gas temperature is lower than 900K or lower than 750K are determined in advance, and fuel injection is carried out in the determined mode of fuel injection.

In each of the above embodiments, the cetane number of fuel is determined by carrying out small fuel injection with no load on the engine. The invention is not limited to this configuration. The cetane number of fuel may be determined on the basis of the energy amount that is generated through execution of the pilot injection or the cetane number of fuel may be determined on the basis of the energy amount that is generated through execution of main injection (single-shot main injection) without pilot injection. However, when the cetane number is determined through execution of the main injection, it is required to set the mode of fuel injection such that the in-cylinder gas temperature at completion of main injection is lower than 900K or lower than 750K.

In each of the above embodiments, the fact that small fuel injection amount learning control is complete is set for the execution condition of the cetane number determination operation. The invention is not limited to this configuration. As a test for the fact that the fuel injection amount is appropriate, the fact that another test (for example, a test carried out by a fuel flow rate sensor provided inside the injector 23) is complete may be set for the execution condition of the cetane number determination operation.

Furthermore, in each of the above embodiments, the engine 1 to which the piezoelectric injectors 23 that enter a fully-open valve open state only in an energization period to change the fuel injection rate are applied is described. Instead, the invention is also applicable to an engine to which a variable injection rate injector is applied.

### INDUSTRIAL APPLICABILITY

The invention is applicable to determining the cetane number of fuel that is used, in a common-rail in-cylinder direct-injection multi-cylinder diesel engine mounted on an automobile.

### DESCRIPTION OF REFERENCE NUMERALS

- 1: engine (internal combustion engine)
- 12: cylinder bore
- 13: piston
- 23: injector (fuel injection valve)
- 3: combustion chamber
- 4A: combustion pressure sensor
- 100: ECU

## Claims

1. A cetane number determination device for an internal combustion engine, which determines a cetane number of a fuel that is used in a compression self-ignition internal combustion engine that carries out combustion through self-ignition of the fuel injected from a fuel injection valve into a cylinder, **characterized in that**
where a total energy amount of the fuel injected from the fuel injection valve into the cylinder is an injected fuel total energy amount, and an energy amount due to combustion of the fuel in a period from timing at which a gas temperature in the cylinder has reached a low-temperature oxidation reaction start temperature of the fuel to timing at which the gas temperature has reached a high-temperature oxidation reaction start temperature is a low-temperature oxidation reaction energy amount,
the cetane number determination device is configured to determine the cetane number of the fuel on the basis of a ratio of the low-temperature oxidation reaction energy amount to the injected fuel total energy amount in the case where fuel injection from the fuel injection valve has completed before the gas temperature in the cylinder reaches the high-temperature oxidation reaction start temperature.

2. The cetane number determination device for an internal combustion engine according to claim 1, wherein
the cetane number determination device is configured to determine that the cetane number of the fuel is higher as the ratio of the low-temperature oxidation reaction energy amount to the injected fuel total energy amount increases.

3. The cetane number determination device for an internal combustion engine according to claim 1 or 2, wherein
the cetane number determination device is configured to start measuring the energy amount due to combustion of the fuel from the timing at which the gas temperature in the cylinder has reached the low-temperature oxidation reaction start temperature of the fuel, complete measuring the energy amount at the timing at which the gas temperature in the cylinder has reached the high-temperature oxidation reaction start temperature of the fuel, and acquire the accumulated energy amount as the low-temperature oxidation reaction energy amount.

4. The cetane number determination device for an internal combustion engine according to claim 1, 2 or 3, wherein
determination of the cetane number of the fuel based on the ratio of the low-temperature oxidation reaction energy amount to the injected fuel total energy amount is configured to be carried out in the case where fuel injection from the fuel injection valve has completed before reaching the low-temperature oxidation reaction start temperature that is further lower than the high-temperature oxidation reaction start temperature of the fuel.

5. The cetane number determination device for an internal combustion engine according to any one of claims 1 to 4, wherein
the low-temperature oxidation reaction start temperature is about 750K, and the high-temperature oxidation reaction start temperature is about 900K.

6. The cetane number determination device for an internal combustion engine according to any one of claims 1 to 5, wherein
operation to determine the cetane number is configured to be executed at least on the condition that learning control over a fuel injection amount from the fuel injection valve is complete and the in-cylinder temperature in the cylinder in a compression stroke is lower than the low-temperature oxidation reaction start temperature.

7. The cetane number determination device according to any one of claims 1 to 6, wherein
operation to determine the cetane number is configured to be executed by carrying out fuel injection with no load on the internal combustion engine.
